# EUROPEAN PATENT SPECIFICATION

(11) **EP 3 988 751 B1**
(45) Date of publication and mention of the grant of the patent: **21.05.2025**
(21) Application number: 20825771.7
(22) Date of filing: 17.01.2020
(51) Int. Cl.: E05D 5/00, E05C 9/00, E05D 5/02, E05C 9/08, E05C 9/22, E05C 9/20, E05C 9/24, E05D 15/30, E05C 9/06

(54) **MOUNTING STRUCTURE**
MONTAGESTRUKTUR
STRUCTURE DE MONTAGE

(30) Priority: 19.06.2019 CN 201910531064
(43) Date of publication of application: 27.04.2022
(73) Proprietor: (Shenzhen Hopo Window Control Technology Co., Ltd), Yutang Jiedao, Guangming District Shenzhen Guangdong 518000 (CN)
(72) Inventor: GAO, Yanhong, Shenzhen, Guangdong 518000 (CN); HUANG, Jieying, Shenzhen, Guangdong 518000 (CN)
(74) Representative: Cabinet Beaumont
(86) International application number: PCT/CN2020/072612
(87) International publication number: WO 2020/253241

(56) References cited:
- EP-A1- 3 263 813
- EP-A2- 2 159 432
- EP-A2- 2 546 438
- CN-A- 105 909 155
- CN-A- 107 524 363
- CN-A- 110 130 727
- CN-A- 110 185 319
- CN-U- 206 337 986
- CN-U- 206 617 031
- DE-A1- 102015 102 868
- DE-A1- 3 016 398
- DE-B4- 10 345 758
- DE-U1- 20 217 752
- DE-U1- 202010 003 921

## Description

### TECHNICAL FIELD

The present application relates to the technical field of architectural decoration and fitting-out, for example, a mounting structure.

### BACKGROUND

In the existing door or window structure, a frame body profile and a leaf body profile are both provided with a groove structure in which a hardware transmission assembly is mounted so that a transmission structure of the frame body and the leaf body is formed and thus the leaf body and the frame body can be opened or locked. The hardware transmission assembly includes transmission rods, conversion transmission parts, and multiple hardware parts.

However, the existing door and window hardware and transmission rods (aluminum rods and plastic rods) all adopt a traditional slotting mounting method. During mounting, the length of the transmission rod needs to be accurately calculated and punching needs to be performed at a preset position. The existing door and window hardware and transmission rods have complex structures, cumbersome operation, long mounting time, and low mounting efficiency.

EP3263813A1 discloses a device 1 for fixing a fitting 2 in a T-shaped groove 3 of a fixed or opening frame type joinery, T-shaped groove 3 delimited by at least one bottom 5 and two side walls 6, 7 each provided with at least one hooking rim 8, 9 distant from the bottom 5.

EP2159432A2 discloses the sliding blocks (2,3) have ends with different curved front side contact surfaces (10,11,12,13) for installing at a groove wall. The sliding block are formed relative to a central longitudinal plane and a fulcrum (4,5) is formed asymmetrically. The contact surfaces are arranged away from the fulcrum of the sliding block.

DE3016398A1 discloses the push-rod fitting in a door frame or window frame is mounted in a recess and covered by a flat metal strip. This is secured by rotatable toggles which protrude beyond the width of the opening in which the push-rod is mounted. Eccentric discs (20) are tightly threaded on screws (22) which pass through the cover strip, the surface of their countersunk heads coinciding with the outer cover surface. Initial screw rotation brings the disc (20) into contact with the recess walls, after which further screw tightening presses the disc into tight contact with the shoulders (16). The screws pass through slots in the push-rod (12).

### SUMMARY

The present application provides a mounting structure according to independent claim 1, which has a simple structure and is convenient for mounting.

The present application adopts technical solutions described below.

Provided is a mounting structure, including a transmission part, a transmission rod, and a profile, where the transmission rod is disposed in a groove of the profile, and the transmission part is provided with a clamping assembly and mounted in the groove of the profile through the clamping assembly.

The clamping assembly includes a base, a rotation part, and an elastic piece.

The base is provided with an accommodation groove and a first boss.

The rotation part is disposed in the accommodation groove and rotatably connected to the base, where the rotation part includes a locking piece, and two ends of the locking piece are capable of protruding out of the accommodation groove to be engaged with the groove of the profile when the rotation part rotates.

A first end of the elastic piece along a length direction of the elastic piece is mounted on the first boss.

In a case that the two ends of the locking piece do not protrude out of the accommodation groove, a second end of the elastic piece along the length direction of the elastic piece is pressed upon the locking piece. And in a case that the two ends of the locking piece protrude out of the accommodation groove during rotation of the locking piece and the second end of the elastic piece is abutting against a side surface of the locking piece, the rotation of the locking piece is limited.

### BRIEF DESCRIPTION OF DRAWINGS

The drawings used in description of embodiments of the present invention will be briefly described below. Apparently, the drawings described below merely illustrate some embodiments of the present application, and those of ordinary skill in the art may obtain other drawings based on the contents of the embodiments of the present invention and these drawings on the premise that no creative work is done.
FIG. 1 is an exploded view of a mounting structure according to an embodiment of the present application when being mounted on a profile;
FIG. 2 is a structure view of a mounting structure according to an embodiment of the present application;
FIG. 3 is a structure view of a conversion rod according to an embodiment of the present application;
FIG. 4 is a first axonometric view of a clamping assembly according to an embodiment of the present application;
FIG. 5 is a second axonometric view of a clamping assembly according to an embodiment of the present application;
FIG. 6 is an exploded view of a clamping assembly according to an embodiment of the present application;
FIG. 7 is a structure view of a clamping assembly in operation according to an embodiment of the present application;
FIG. 8 is a structure view of a handle according to an embodiment of the present application;
FIG. 9 is a structure view of a bolt according to an embodiment of the present application;
FIG. 10 is a structure view of a first lock rod according to an embodiment of the present application;
FIG. 11 is a structure view of a first angle actuator according to an embodiment of the present application;
FIG. 12 is a structure view of a lower hinge assembly according to an embodiment of the present application;
FIG. 13 is a structure view of a second lock rod according to an embodiment of the present application;
FIG. 14 is a structure view of a second angle actuator according to an embodiment of the present application;
FIG. 15 is a structure view of a third angle actuator according to an embodiment of the present application;
FIG. 16 is a structure view of an upper hinge assembly according to an embodiment of the present application;
FIG. 17 is a schematic view illustrating the assembly of an old type transmission rod with an old type profile in the related art; and
FIG. 18 is a schematic view illustrating the assembly of a first transmission rod with a profile according to an embodiment of the present application.

### Reference list

- 10: conversion rod
- 101: slot
- 11: clamping assembly
- 12: handle
- 121: insertion block
- 111: base
- 112: rotation part
- 113: elastic piece
- 1111: accommodation groove
- 1112: first boss
- 11121: clamping protrusion
- 1113: first connection hole
- 1114: through hole
- 1121: locking piece
- 11211: second boss
- 1122: connection shaft
- 11221: second connection hole
- 1131: connection plate
- 11311: third connection hole
- 21: first transmission rod
- 22: second transmission rod
- 23: third transmission rod
- 24: fourth transmission rod
- 31: bolt
- 311: clamping block
- 32: first lock rod
- 321: first lock block
- 33: second lock rod
- 331: second lock block
- 41: first angle actuator
- 411: first connection end
- 42: second angle actuator
- 421: second connection end
- 43: third angle actuator
- 431: third connection end
- 51: lower hinge assembly
- 511: sliding groove
- 512: lower rotation portion
- 52: upper hinge assembly
- 521: fixing portion
- 522: upper rotation portion
- 100: profile
- 200: old type profile
- 300: old type transmission rod

### DETAILED DESCRIPTION

Technical solutions in embodiments of the present invention will be further described below in detail in conjunction with the drawings. Apparently, the embodiments described below are merely part, not all of embodiments of the present application.

In the description of the present application, it is to be noted that orientations or position relations indicated by terms such as "center", "upper", "lower", "left", "right", "vertical", "horizontal", "in", and "out" are based on the drawings. These orientations or position relations are intended only to facilitate and simplify the description of the present application and not to indicate or imply that a device or element referred to must have such particular orientations or must be configured or operated in such particular orientations. Thus, these orientations or position relations are not to be construed as limiting the present application. In addition, terms such as "first" and "second" are used merely for the purpose of description and are not to be construed as indicating or implying relative importance. Terms "first position" and "second position" are two different positions.

In the description of the present application, it is to be noted that terms such as "mounted", "joined", and "connected" are to be understood in a broad sense unless otherwise expressly specified and limited. For example, the term "connected" may refer to "securely connected" or "detachably connected"; may refer to "mechanically connected" or "electrically connected"; or may refer to "connected directly", "connected indirectly through an intermediary", or "connected in two components". For those of ordinary skill in the art, the specific meanings of the preceding terms in the present application may be understood based on specific situations.

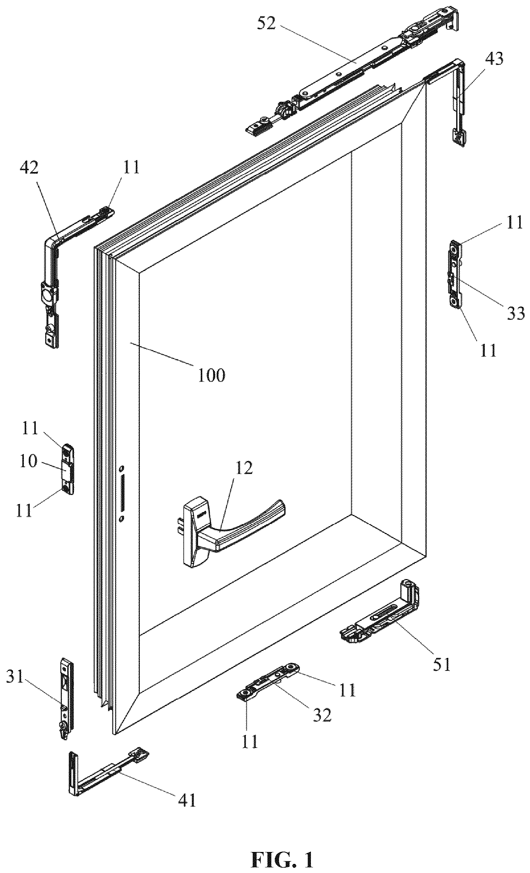

This embodiment provides a mounting structure used for mounting a leaf body of a door or window. As shown in FIGS. 1 to 3, the mounting structure includes a transmission part, a transmission rod, and a profile 100, where the transmission part is a conversion rod 10, a lock rod, or an angle actuator, and the transmission rod is disposed in a groove of the profile 100. To facilitate understanding, in this embodiment, the case where a conversion rod 10 is the transmission part is used as an example for description. The conversion rod 10 is configured to convert a rotational force from a user into a force required to unlock the leaf body from a frame body. The conversion rod 10 is provided with a clamping assembly 11 and mounted in the groove of the profile 100 through the clamping assembly 11. In this embodiment, the profile 100 forms a leaf body frame of the door or window, and two ends of the conversion rod 10 are both provided with a clamping assembly 11. The clamping assembly 11 includes a base 111, a rotation part 112, and an elastic piece 113. The base 111 is part of the conversion rod 10, and for ease of description of the clamping assembly 11, the base 111 is named separately for description.

In some examples, the transmission rod can slide in the groove of the profile 100 along a length direction of the transmission rod. The transmission part (such as the conversion rod 10, the lock rod, or the angle actuator) is connected to the transmission rod and configured to allow the transmission rod to slide in the groove of the profile 100 along the length direction of the transmission rod.

In some examples, the transmission part is mounted in the groove of the profile 100 through the clamping assembly 11 to slidably limit the transmission rod in the groove of the profile 100.

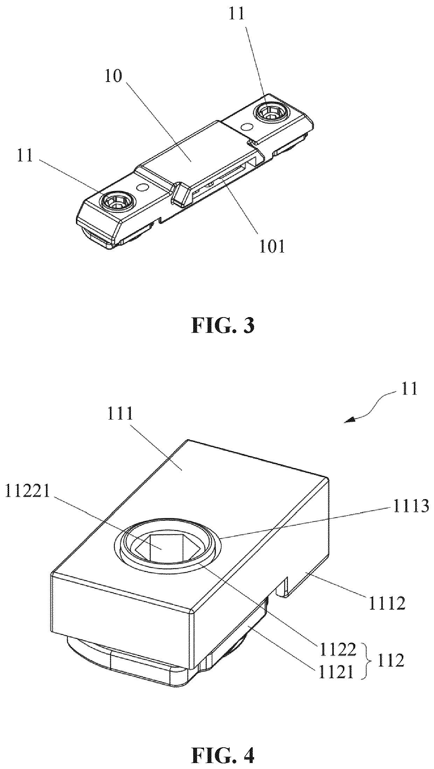

In some examples, as shown in FIGS. 4 to 7, the base 111 is provided with an accommodation groove 1111 and a first boss 1112. The rotation part 112 is disposed in the accommodation groove 1111 and rotatably connected to the base 111, the rotation part 112 includes a locking piece 1121, and two ends of the locking piece 1121 can protrude out of the accommodation groove 1111 to be engaged with the groove of the profile 100 when the rotation part 112 rotates. A first end of the elastic piece 113 along a length direction of the elastic piece 113 is mounted on the first boss 1112, and a second end of the elastic piece 113 along the length direction of the elastic piece 113 can abut against a side surface of the locking piece 1121, so as to limit rotation of the locking piece 1121.

In some examples, the elastic piece 113 is configured to limit the rotation of the locking piece 1121 when the two ends of the locking piece 1121 protrude out of the accommodation groove 1111.

In some examples, the locking piece 1121 has an initial state and a protruding state. When the locking piece 1121 is in the initial state, the locking piece 1121 is completely disposed in the accommodation groove 1111 and does not protrude out of the accommodation groove 1111. When the locking piece 1121 is in the protruding state, the two ends of the locking piece 1121 protrude out of the accommodation groove 1111.

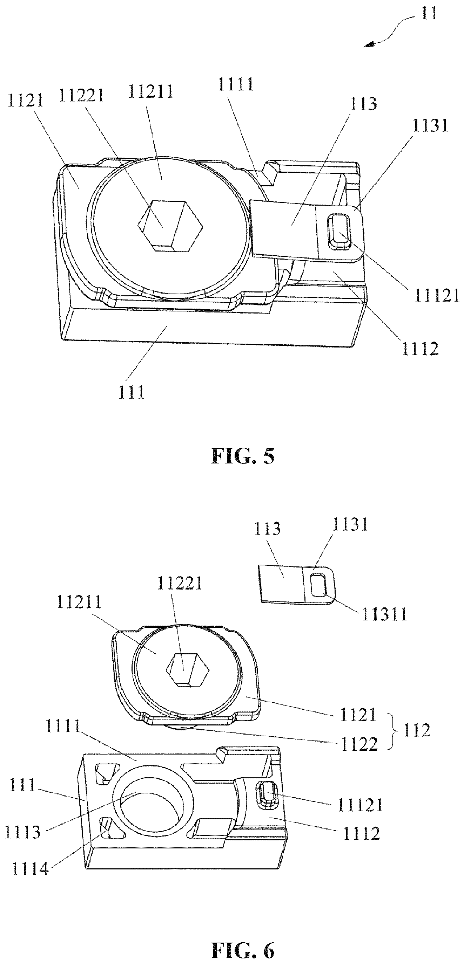

As shown in FIG. 5, in this embodiment, the first boss 1112 protrudes from a bottom surface of the base 111, and the bottom surface of the base 111 and one side surface of the first boss 1112 define the accommodation groove 1111 and are inner walls of the accommodation groove 1111.

It is to be understood that the two ends of the locking piece 1121 capable of protruding out of the accommodation groove 1111 means that the two ends of the locking piece 1121 can protrude outward relative to circumferential side surfaces adjacent to the bottom surface of the base 111.

In some examples, during the mounting, the transmission rod is directly placed in the groove of the profile 100, the conversion rod 10 provided with the clamping assembly 11 is placed on the transmission rod, and the conversion rod 10 is disposed in the groove of the profile 100; the rotation part 112 is rotated on the base 111 and drives the locking piece 1121 to rotate together, and the two ends of the locking piece 1121 protrude out of the accommodation groove 1111 to be engaged with the groove of the profile 100, so as to complete the mounting. During mounting, slotting and punching operations do not need to be performed for the cooperation between the transmission rod and the profile, as long as the transmission rod is directly placed in the groove of the profile; and a length of the transmission rod does not need to be accurately calculated. An allowable error range is large and it is convenient and quick to perform mounting so that mounting time is saved. Moreover, one end of the elastic piece 113 is pressed upon the locking piece 1121, where the elastic piece 113 is mounted on the first boss 1112. During the rotation of the locking piece 1121, under an elastic force of the elastic piece 113, the one end of the elastic piece 113 gradually switches to abut against the side surface of the locking piece 1121, so as to limit the rotation of the locking piece 1121. In this manner, this structure has a self-locking function. This structure is easy to operate, simple in structure, high in mounting efficiency, stable in structure, and has a self-locking function, slotting and punching and accurate calculation of the length of the transmission rod do not need to be performed, and the allowable error range is large.

To ensure that the locking piece 1121 in the initial state is completely disposed in the accommodation groove 1111, optionally, the width of the locking piece 1121 is less than or equal to the width of the accommodation groove 1111. To facilitate the mounting and cooperation of the locking piece 1121 and the elastic piece 113, optionally, the accommodation groove 1111 and the first boss 1112 are both disposed on the bottom surface of the base 111. To reduce the overall weight of the hardware mounting structure, optionally, the base 111 is provided with a through hole 1114 to reduce the weight of the base 111.

To achieve the rotational connection between the rotation part 112 and the base 111, optionally, the base 111 is provided with a first connection hole 1113, the rotation part 112 further includes a connection shaft 1122 fitting with the first connection hole 1113, and the locking piece 1121 is disposed at one end of the connection shaft 1122. To facilitate the rotation of the connection shaft 1122 through a mounting tool, optionally, a second connection hole 11221 is disposed in the connection shaft 1122. Optionally, a cross section of the second connection hole 11221 is a regular hexagon, which is convenient for use with the existing mounting tool Optionally, a second boss 11211 is disposed on one side of the locking piece 1121 facing away from the connection shaft 1122, and a side surface of the second boss 11211 is used for abutting against the elastic piece 113. In this embodiment, the second boss 11211 may be integrally formed with the connection shaft 1122, and the locking piece 1121 is sleeved on the connection shaft 1122.

As shown in FIG. 5, in this embodiment, the first connection hole 1113 is disposed at a bottom of the accommodation groove 1111.

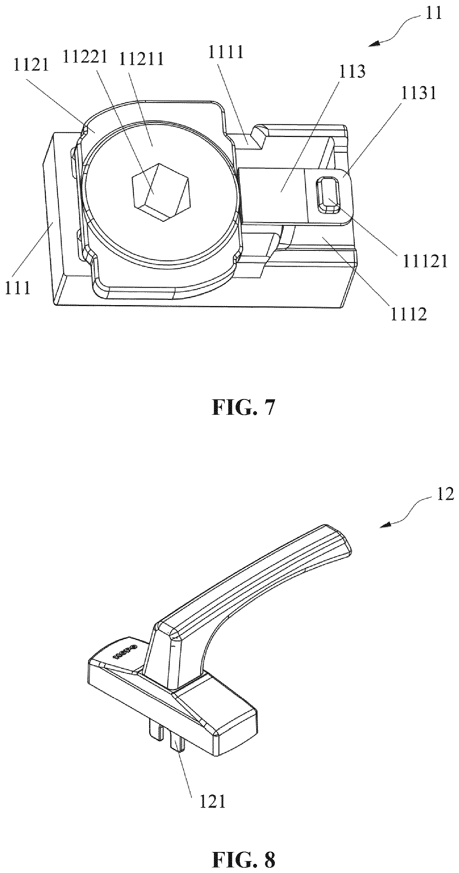

In this embodiment, when the locking piece 1121 is in the protruding state as shown in FIG. 7, the locking piece 1121 has two opposite sides that do not protrude out of an outer edge of the second boss 11211, and the locking piece 1121 also has two opposite ends protruding out of the outer edge of the second boss 11211. In some examples, an orientation of the two opposite sides of the locking piece 1121 is substantially perpendicular to an orientation of the two opposite ends of the locking piece 1121.

To facilitate the mounting of the elastic piece 113, optionally, the elastic piece 113 is mounted on the first boss 1112 through a connection plate 1131. To facilitate the mounting of the connection plate 1131, optionally, the first boss 1112 is provided with a clamping protrusion 11121, and the connection plate 1131 is provided with a third connection hole 11311 fitting with the clamping protrusion 11121. The structure is stable and easy to disassemble and assemble.

During mounting, the following steps are included: the hardware mounting structure is placed vertically in the groove of the profile 100. The rotation part 112 is rotated on the base 111 through the mounting tool inserted into the second connection hole 11221 of the connection shaft 1122, the rotation part 112 drives the locking piece 1121 to rotate together, and the two ends of the locking piece 1121 protrude out of the accommodation groove 1111 to be engaged with the groove of the profile 100. The one end of the elastic piece 113 is pressed upon the locking piece 1121, where the elastic piece 113 is mounted on the first boss 1112. During the rotation of the locking piece 1121, under the elastic force of the elastic piece 113, the one end of the elastic piece 113 gradually switches to abut against the side surface of the locking piece 1121, so as to limit the rotation of the locking piece 1121. In this manner, this structure has a self-locking function.

To facilitate the user to open the leaf body of the door or window by hand, optionally, as shown in FIG. 8, the mounting structure further includes a handle 12. The handle 12 is connected to the conversion rod 10 and configured to drive the conversion rod 10 to move on the profile 100. In this embodiment, the handle 12 is connected to a slot 101 (as shown in FIG. 3) on the conversion rod 10 through an insertion block 121. When the user turns the handle 12, the insertion block 121 moves up and down to drive the conversion rod 10 to move up and down through the slot 101 fitting with the insertion block 121. A transmission principle of the handle 12 and the conversion rod 10 may refer to the related art, such as a conversion rod 10 of the model FM18 AGC31.23 and a square-axis handle 12 of the model PH903 produced by Shenzhen HOPO Window Control Technology Co., Ltd.

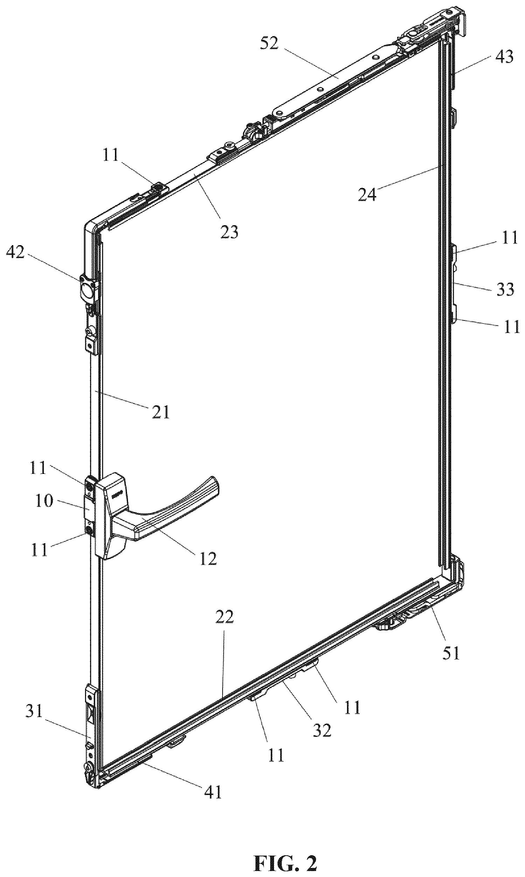

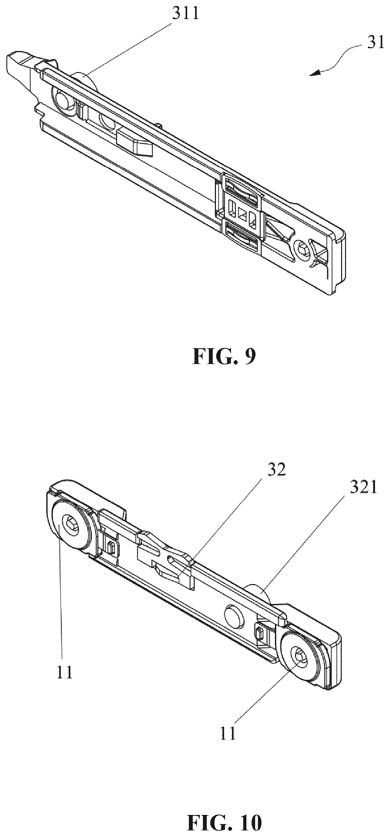

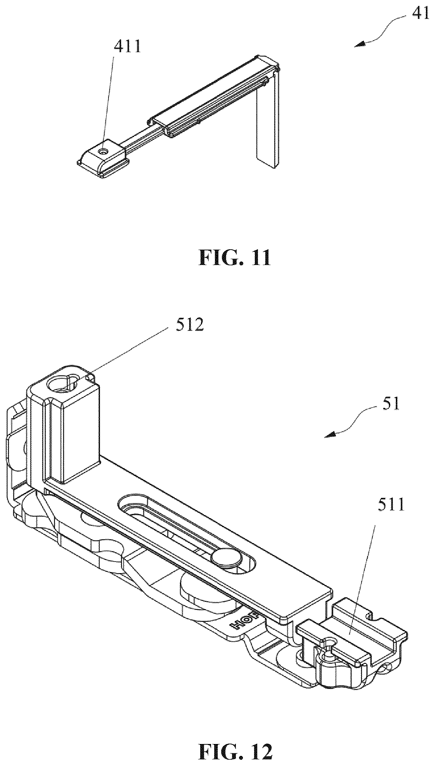

Optionally, as shown in FIG. 2, the transmission rod includes a first transmission rod 21 disposed in the groove of the profile 100. A middle part of the first transmission rod 21 is connected to the conversion rod 10, and a bottom of the first transmission rod 21 is connected to a bolt 31 (as shown in FIG. 9). When the conversion rod 10 moves up and down, the first transmission rod 21 is driven to move up and down so that a clamping block 311 of the bolt 31 on the leaf body is inserted into or pulled out of a corresponding position on the frame body to lock or unlock the frame body. To ensure a uniform force of the leaf body, optionally, the bottom of the first transmission rod 21 is connected to a second transmission rod 22, the second transmission rod 22 is connected to a first lock rod 32 (as shown in FIG. 10), the first lock rod 32 is provided with the clamping assembly 11, and the first lock rod 32 is mounted on the profile 100 through the clamping assembly 11. Optionally, the first transmission rod 21 is connected to the second transmission rod 22 through a first angle actuator 41 (as shown in FIG. 11). In this embodiment, the first angle actuator 41 is provided with a first connection end 411 connected to the second transmission rod 22. When the first transmission rod 21 moves up and down, the second transmission rod 22 is driven by the first angle actuator 41 to move horizontally so that a first lock block 321 on the first lock rod 32 is clamped into or pulled out of a corresponding position on the frame body to lock or unlock the frame body. It is to be noted that the first angle actuator 41 may be the existing angle actuator on the market, such as an aluminum alloy door and window actuator of the model Austria MACO sold by Jinan Deno Door and Window Fittings Co., Ltd. The operation principle may refer to the related art and is not repeated herein. Optionally, the mounting structure further includes a lower hinge assembly 51 (as shown in FIG. 12) connected to the frame body. In this embodiment, one end of the lower hinge assembly 51 is provided with a sliding groove 511 slidably connected to the second transmission rod 22, and the other end of the lower hinge assembly 51 is provided with a lower rotation portion 512 rotatably connected to the frame body.

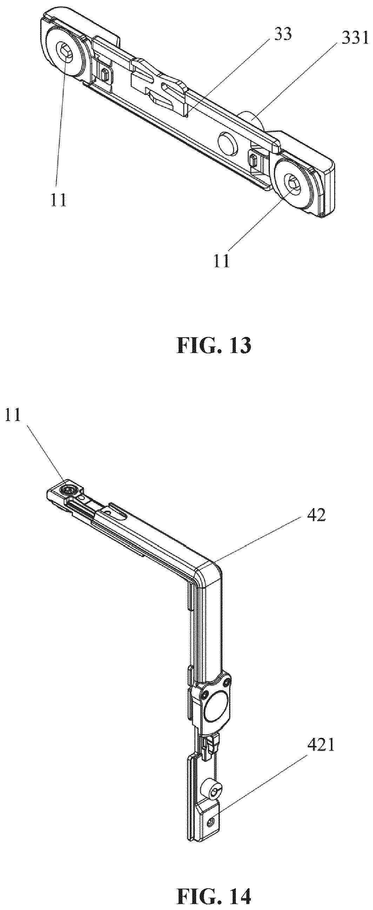

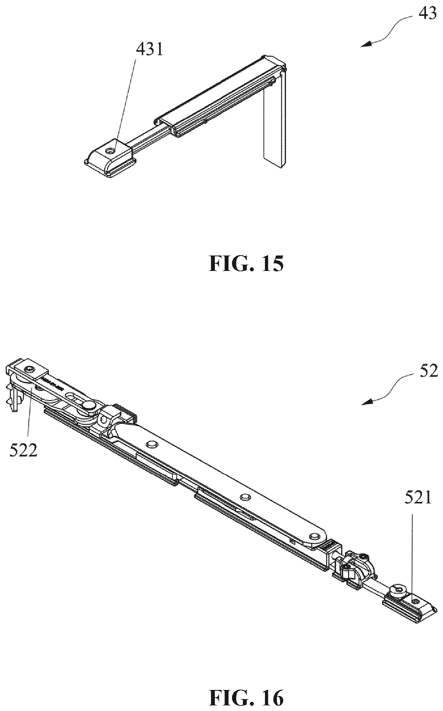

Optionally, the first transmission rod 21 is connected to a third transmission rod 23, and the third transmission rod 23 is connected to a fourth transmission rod 24. The fourth transmission rod 24 is connected to a second lock rod 33 (as shown in FIG. 13), the second lock rod 33 is provided with the clamping assembly 11, and the second lock rod 33 is mounted on the profile 100 through the clamping assembly 11. When the conversion rod 10 moves up and down, the first transmission rod 21 is driven to move up and down, and the first transmission rod 21 drives the third transmission rod 23 and the fourth transmission rod 24 so that the fourth transmission rod 24 moves up and down and then a second lock block 331 of the second lock rod 33 is inserted into or pulled out of a corresponding position on the frame body to lock or unlock the frame body. Optionally, the first transmission rod 21 is connected to the third transmission rod 23 through a second angle actuator 42 (as shown in FIG. 14), the second angle actuator 42 is provided with the clamping assembly 11, and the second angle actuator 42 is mounted on the third transmission rod 23 through the clamping assembly 11. The second angle actuator 42 is similar in principle to the first angle actuator 41, and the difference between the second angle actuator 42 and the first angle actuator 41 is that the second angle actuator 42 is provided with the clamping assembly 11, The base 111 of the clamping assembly 11 is integrally formed with the second angle actuator 42, and the second angle actuator 42 is connected to the third transmission rod 23 through the clamping assembly 11, which is convenient and quick to perform the mounting. The second angle actuator 42 is provided with a second connection end 421 connected to the first transmission rod 21. Optionally, the third transmission rod 23 is connected to the fourth transmission rod 24 through a third angle actuator 43 (as shown in FIG. 15). The third angle actuator 43 is provided with a third connection end 431 connected to the fourth transmission rod 24. The structure and principle of the third angle actuator 43 are the same as the structure and principle of the first angle actuator 41, which will not be repeated herein. Optionally, the mounting structure further includes an upper hinge assembly 52 (as shown in FIG. 16) connected to the third transmission rod 23. One end of the upper hinge assembly 52 is provided with a fixing portion 521 connected to the third transmission rod 23, and the other end of the upper hinge assembly 52 is provided with an upper rotation portion 522 rotatably connected to the frame body.

In the mounting structure provided in this embodiment, the conversion rod 10, the first lock rod 32, the second lock rod 33, and the second angle actuator 42 each are disposed with the clamping assembly 11, and the base 111 of the clamping assembly 11 is part of the conversion rod 10 (the first lock rod 32, the second lock rod 33, or the second angle actuator 42). During mounting, the transmission rod (such as the first transmission rod 21, the second transmission rod 22, the third transmission rod 23, or the fourth transmission rod 24) is directly placed in the groove of the profile 100, the conversion rod 10 provided with the clamping assembly 11 is placed on the transmission rod, the conversion rod 10 is disposed in the groove of the profile 100, the rotation part 112 is rotated on the base 111 and drives the locking piece 1121 to rotate together, and the two ends of the locking piece 1121 protrude out of the accommodation groove 1111 to be engaged with the groove of the profile 100, so as to complete the mounting. During mounting, slotting and punching operations do not need to be performed for the cooperation between the transmission rod and the profile 100, as long as the transmission rod is directly placed in the groove of the profile; and the length of the transmission rod does not need to be accurately calculated. The allowable error range is large and it is convenient and quick to perform the mounting so that mounting time is saved. In addition, the one end of the elastic piece 113 is pressed upon the locking piece 1121, where the elastic piece 113 is mounted on the first boss 1112. During the rotation of the locking piece 1121, under the elastic force of the elastic piece 113, the one end of the elastic piece 113 gradually switches to abut against the side surface of the locking piece 1121, so as to limit the rotation of the locking piece 1121. In this manner, this structure has a self-locking function. The mounting structure provided in this embodiment is easy to operate, simple in structure, high in mounting efficiency, stable in structure, and has a self-locking function, slotting and punching and accurate calculation of the length of the transmission rod do not need to be performed, and the allowable error range is large.

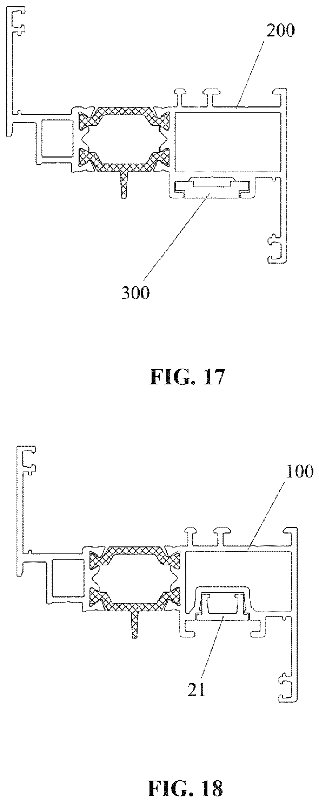

It is to be noted that, as shown in FIG. 17, an old type transmission rod 300 is mounted on an old type profile 200 through slotting and punching in the related art, which is time-consuming and labor-intensive, and the mounting efficiency is low. FIG. 18 is a schematic view illustrating that a transmission rod is mounted on a profile according to the present application. Exemplarily, the case where the first transmission rod 21 is used as the transmission rod is used as an example for description in the figure. The profile 100 is provided with a groove, the transmission rod (the first transmission rod 21) is directly disposed in the groove of the profile 100, and then the transmission part is mounted through the clamping assembly. During mounting, slotting and punching operations do not need to be performed for the cooperation between the transmission rod and the profile, as long as the transmission rod is directly placed in the groove of the profile; and the length of the transmission rod does not need to be accurately calculated. The allowable error range is large and it is convenient and quick to perform the mounting so that mounting time is saved.

In the mounting structure provided in this embodiment, during mounting, the transmission rod is directly placed in the groove of the profile, the transmission part provided with the clamping assembly is placed on the transmission rod, and the transmission part is disposed in the groove of the profile; the rotation part is rotated on the base and drives the locking piece to rotate together, and the two ends of the locking piece protrude out of the accommodation groove to be engaged with the groove of the profile, so as to complete the mounting. During mounting, slotting and punching operations do not need to be performed for the cooperation between the transmission rod and the profile, as long as the transmission rod is directly placed in the groove of the profile; and the length of the transmission rod does not need to be accurately calculated. The allowable error range is large and it is convenient and quick to perform the mounting so that mounting time is saved. In addition, the one end of the elastic piece is pressed upon the locking piece, where the elastic piece is mounted on the first boss. During the rotation of the locking piece, under the elastic force of the elastic piece, the one end of the elastic piece gradually switches to abut against the side surface of the locking piece, so as to limit the rotation of the locking piece. In this manner, this structure has a self-locking function. The mounting structure provided in this embodiment is easy to operate, simple in structure, high in mounting efficiency, stable in structure, and has a self-locking function, slotting and punching and accurate calculation of the length of the transmission rod do not need to be performed, and the allowable error range is large.

## Claims

1. A mounting structure, comprising a transmission part, a transmission rod, and a profile (100), wherein the transmission rod is disposed in a groove of the profile (100), and the transmission part is provided with a clamping assembly (11) and mounted in the groove of the profile (100) through the clamping assembly (11);
wherein the clamping assembly (11) comprises:
a base (111) provided with an accommodation groove (1111) and a first boss (1112);
a rotation part (112) disposed in the accommodation groove (1111) and rotatably connected to the base (111), wherein the rotation part (112) comprises a locking piece (1121), and two ends of the locking piece (1121) are capable of protruding out of the accommodation groove (1111) to be engaged with the groove of the profile (100) when the rotation part (112) rotates; and
an elastic piece (113), wherein a first end of the elastic piece (113) along a length direction of the elastic piece (113) is mounted on the first boss (1112);
**characterized in that**,
in a case that the two ends of the locking piece (1121) do not protrude out of the accommodation groove (1111), a second end of the elastic piece (113) along the length direction of the elastic piece (113) is pressed upon the locking piece (1121), and
in a case that the two ends of the locking piece (1121) protrude out of the accommodation groove (1111) during rotation of the locking piece (1121) and the second end of the elastic piece (113) is abutting against a side surface of the locking piece (1121), the rotation of the locking piece (1121) is limited.

2. The mounting structure of claim 1, wherein the transmission part is a conversion rod (10), the transmission rod comprises a first transmission rod (21) disposed in the groove of the profile (100), a middle part of the first transmission rod (21) is connected to the conversion rod (10), and a bottom of the first transmission rod (21) is connected to a bolt (31).

3. The mounting structure of claim 2, wherein the bottom of the first transmission rod (21) is connected to a second transmission rod (22), the second transmission rod (22) is connected to a first lock rod (32), the first lock rod (32) is provided with the clamping assembly (11), and the first lock rod (32) is mounted on the profile (100) through the clamping assembly (11).

4. The mounting structure of claim 3, wherein the first transmission rod (21) is connected to the second transmission rod (22) through a first angle actuator (41).

5. The mounting structure of claim 3, further comprising a lower hinge assembly (51) connected to a frame body.

6. The mounting structure of claim 2, wherein the first transmission rod (21) is connected to a third transmission rod (23), the third transmission rod (23) is connected to a fourth transmission rod (24), the fourth transmission rod (24) is connected to a second lock rod (33), the second lock rod (33) is provided with the clamping assembly (11), and the second lock rod (33) is mounted on the profile (100) through the clamping assembly (11).

7. The mounting structure of claim 6, wherein the first transmission rod (21) is connected to the third transmission rod (23) through a second angle actuator (42), the second angle actuator (42) is provided with the clamping assembly (11), and the second angle actuator (42) is mounted on the third transmission rod (23) through the clamping assembly (11).

8. The mounting structure of claim 6, wherein the third transmission rod (23) is connected to the fourth transmission rod (24) through a third angle actuator (43).

9. The mounting structure of claim 6, further comprising an upper hinge assembly (52) connected to the third transmission rod (23).

10. The mounting structure of claim 1, wherein the transmission part is a conversion rod (10), a lock rod, or an angle actuator.

11. The mounting structure of any one of claims 1 to 10, wherein the transmission part is a conversion rod (10) and the mounting structure further comprises a handle (12), wherein the handle (12) is connected to the conversion rod (10) and configured to drive the conversion rod (10) to move on the profile (100).

## Patentansprüche

1. Montagestruktur, umfassend ein Übertragungsteil, eine Übertragungsstange und ein Profil (100), wobei die Übertragungsstange in einer Nut des Profils (100) angeordnet ist und das Übertragungsteil mit einer Klemmbaugruppe (11) versehen ist und durch die Klemmbaugruppe (11) in der Nut des Profils (100) montiert ist;
wobei die Klemmbaugruppe (11) Folgendes umfasst:
eine Basis (111), die mit einer Aufnahmenut (1111) und einem ersten Vorsprung (1112) versehen ist;
ein Drehteil (112), das in der Aufnahmenut (1111) angeordnet und drehbar mit der Basis (111) verbunden ist, wobei das Drehteil (112) ein Verriegelungsstück (1121) umfasst, und zwei Enden des Verriegelungsstücks (1121) aus der Aufnahmenut (1111) hervorragen können, um mit der Nut des Profils (100) in Eingriff zu kommen, wenn das Drehteil (112) rotiert; und
ein Federelement (113), wobei ein erstes Ende des Federelements (113) entlang einer Längsrichtung des Federelements (113) auf dem ersten Vorsprung (1112) montiert ist;
**dadurch gekennzeichnet, dass**
in einem Fall, in dem die beiden Enden des Verriegelungsstücks (1121) nicht aus der Aufnahmenut (1111) hervorragen, ein zweites Ende des Federelements (113) entlang der Längsrichtung des Federelements (113) gegen das Verriegelungsstück (1121) drückt, und
in einem Fall, in dem die beiden Enden des Verriegelungsstücks (1121) während der Drehung des Verriegelungsstücks (1121) aus der Aufnahmenut (1111) hervorragen und das zweite Ende des Federelements (113) gegen eine Seitenfläche des Verriegelungsstücks (1121) anliegt, die Drehung des Verriegelungsstücks (1121) begrenzt ist.

2. Montagestruktur nach Anspruch 1, wobei das Übertragungsteil ein Umwandlungsstab (10) ist, wobei die Übertragungsstange eine erste Übertragungsstange (21) umfasst, die in der Nut des Profils (100) angeordnet ist, wobei ein Mittelteil der ersten Übertragungsstange (21) mit dem Umwandlungsstab (10) verbunden ist und ein unteres Ende der ersten Übertragungsstange (21) mit einer Schraube (31) verbunden ist.

3. Montagestruktur nach Anspruch 2, wobei das untere Ende der ersten Übertragungsstange (21) mit einer zweiten Übertragungsstange (22) verbunden ist, wobei die zweite Übertragungsstange (22) mit einem ersten Verriegelungsstab (32) verbunden ist, wobei der erste Verriegelungsstab (32) mit der Klemmbaugruppe (11) versehen ist und der erste Verriegelungsstab (32) durch die Klemmbaugruppe (11) am Profil (100) montiert ist.

4. Montagestruktur nach Anspruch 3, wobei die erste Übertragungsstange (21) über einen ersten Winkelaktuator (41) mit der zweiten Übertragungsstange (22) verbunden ist.

5. Montagestruktur nach Anspruch 3, ferner umfassend eine untere Scharnierbaugruppe (51), die mit einem Rahmenkörper verbunden ist.

6. Montagestruktur nach Anspruch 2, wobei die erste Übertragungsstange (21) mit einer dritten Übertragungsstange (23) verbunden ist, wobei die dritte Übertragungsstange (23) mit einer vierten Übertragungsstange (24) verbunden ist, wobei die vierte Übertragungsstange (24) mit einem zweiten Verriegelungsstab (33) verbunden ist, wobei der zweite Verriegelungsstab (33) mit der Klemmbaugruppe (11) versehen ist und der zweite Verriegelungsstab (33) durch die Klemmbaugruppe (11) am Profil (100) montiert ist.

7. Montagestruktur nach Anspruch 6, wobei die erste Übertragungsstange (21) über einen zweiten Winkelaktuator (42) mit der dritten Übertragungsstange (23) verbunden ist, wobei der zweite Winkelaktuator (42) mit der Klemmbaugruppe (11) versehen ist und der zweite Winkelaktuator (42) durch die Klemmbaugruppe (11) an der dritten Übertragungsstange (23) montiert ist.

8. Montagestruktur nach Anspruch 6, wobei die dritte Übertragungsstange (23) über einen dritten Winkelaktuator (43) mit der vierten Übertragungsstange (24) verbunden ist.

9. Montagestruktur nach Anspruch 6, ferner umfassend eine obere Scharnierbaugruppe (52), die mit der dritten Übertragungsstange (23) verbunden ist.

10. Montagestruktur nach Anspruch 1, wobei das Übertragungsteil ein Umwandlungsstab (10), ein Verriegelungsstab oder ein Winkelaktuator ist.

11. Montagestruktur nach einem der Ansprüche 1 bis 10, wobei das Übertragungsteil ein Umwandlungsstab (10) ist und die Montagestruktur ferner einen Griff (12) umfasst, wobei der Griff (12) mit dem Umwandlungsstab (10) verbunden ist und dazu ausgelegt ist, den Umwandlungsstab (10) zur Bewegung entlang des Profils (100) anzutreiben.

## Revendications

1. Structure de montage, comprenant une portion de transmission, une tige de transmission et un profilé (100), dans laquelle la tige de transmission est disposée dans une rainure du profilé (100), et la portion de transmission est pourvue d'un ensemble de serrage (11) et est montée dans la rainure du profilé (100) par l'intermédiaire de l'ensemble de serrage (11) ;
dans laquelle l'ensemble de serrage (11) comprend :
une base (111) pourvue d'une rainure d'accueil (1111) et d'un premier bossage (1112) ;
une portion rotative (112) disposée dans la rainure d'accueil (1111) et reliée de manière rotative à la base (111), dans laquelle la portion rotative (112) comprend une pièce de verrouillage (1121), et deux extrémités de la pièce de verrouillage (1121) sont capables de faire saille hors la rainure d'accueil (1111) pour être engagées avec la rainure du profilé (100) lors de la rotation de la portion rotative (112) ; et
une pièce élastique (113), dans laquelle une première extrémité de la pièce élastique (113) dans une direction de longueur de la pièce élastique (113) est montée sur le premier bossage (1112) ;
**caractérisée en ce que**,
au cas où les deux extrémités de la pièce de verrouillage (1121) ne font saillie pas hors la rainure d'accueil (1111), une seconde extrémité de la pièce élastique (113) dans la direction de longueur de la pièce élastique (113) s'appuie contre la pièce de verrouillage (1121), et
au cas où les deux extrémités de la pièce de verrouillage (1121) font saillie hors la rainure d'accueil (1111) lors de la rotation de la pièce de verrouillage (1121) et la seconde extrémité de la pièce élastique (113) s'appuie contre une surface latérale de la pièce de verrouillage (1121), la rotation de la pièce de verrouillage (1121) est limitée.

2. Structure de montage selon la revendication 1, dans laquelle la portion de transmission est une tige de conversion (10), la tige de transmission comprend une première tige de transmission (21) disposée dans la rainure du profilé (100), une portion intermédiaire de la première tige de transmission (21) est reliée à la tige de conversion (10), et une partie inférieure de la première tige de transmission (21) est reliée à un boulon (31).

3. Structure de montage selon la revendication 2, dans laquelle la partie inférieure de la première tige de transmission (21) est reliée à une deuxième tige de transmission (22), la deuxième tige de transmission (22) est reliée à une première tige de verrouillage (32), la première tige de verrouillage (32) est pourvue de l'ensemble de serrage (11), et la première tige de verrouillage (32) est montée sur le profilé (100) par l'intermédiaire de l'ensemble de serrage (11).

4. Structure de montage selon la revendication 3, dans laquelle la première tige de transmission (21) est reliée à la deuxième tige de transmission (22) par l'intermédiaire d'un premier actionneur d'angle (41).

5. Structure de montage selon la revendication 3, comprenant en outre un ensemble de charnière inférieure (51) relié à un corps de cadre.

6. Structure de montage selon la revendication 2, dans laquelle la première tige de transmission (21) est reliée à une troisième tige de transmission (23), la troisième tige de transmission (23) est reliée à une quatrième tige de transmission (24), la quatrième tige de transmission (24) est reliée à une deuxième tige de verrouillage (33), la deuxième tige de verrouillage (33) est pourvue de l'ensemble de serrage (11), et la deuxième tige de verrouillage (33) est montée sur le profilé (100) par l'intermédiaire de l'ensemble de serrage (11).

7. Structure de montage selon la revendication 6, dans laquelle la première tige de transmission (21) est reliée à la troisième tige de transmission (23) par l'intermédiaire d'un deuxième actionneur d'angle (42), le deuxième actionneur d'angle (42) est pourvu de l'ensemble de serrage (11), et le deuxième actionneur d'angle (42) est monté sur la troisième tige de transmission (23) par l'intermédiaire de l'ensemble de serrage (11).

8. Structure de montage selon la revendication 6, dans laquelle la troisième tige de transmission (23) est reliée à la quatrième tige de transmission (24) par l'intermédiaire d'un troisième actionneur d'angle (43).

9. Structure de montage selon la revendication 6, comprenant en outre un ensemble de charnière supérieure (52) relié à la troisième tige de transmission (23).

10. Structure de montage selon la revendication 1, dans laquelle la portion de transmission est une tige de conversion (10), une tige de verrouillage ou un actionneur d'angle.

11. Structure de montage selon l'une quelconque des revendications 1 à 10, dans laquelle la portion de transmission est une tige de conversion (10) et la structure de montage comprend en outre une poignée (12), dans laquelle la poignée (12) est reliée à la tige de conversion (10) et configurée pour entraîner la tige de conversion (10) à se déplacer sur le profilé (100).
